# FASCICULE DE BREVET EUROPEEN

(11) **EP 4 379 240 B1**
(45) Date de publication et mention de la délivrance du brevet: **23.07.2025**
(21) Numéro de dépôt: 22210374.9
(22) Date de dépôt: 29.11.2022
(51) Int. Cl.: F16H 63/34

(54) **SYSTÈME DE BLOCAGE EN STATIONNEMENT POUR UNE TRANSMISSION D'UN RÉDUCTEUR OU D'UNE BOÎTE DE VITESSES D'UN VÉHICULE AUTOMOBILE**
PARKSPERRSYSTEM FÜR EIN UNTERSETZUNGSGETRIEBE ODER EIN GETRIEBES EINES KRAFTFAHRZEUGS
PARKING LOCK FOR A REDUCTION GEARBOX OR A GEARBOX OF A MOTOR VEHICLE

(43) Date de publication de la demande: 05.06.2024
(73) Titulaire: DURA Automotive Holdings U.K., Ltd., Birmingham, B35 7AG (GB)
(72) Inventeur: PRADIER, Philippe, 42290 SORBIERS (FR); LECRINIER, Xavier, 42000 SAINT-ETIENNE (FR)
(74) Mandataire: Ipsilon Lyon

(56) Documents cités:
- EP-A1- 3 620 690
- EP-A2- 2 410 214
- WO-A1-2008/078017
- DE-A1- 102005 024 468
- DE-A1- 102017 212 466

## Description

### DOMAINE TECHNIQUE

L'invention se rattache au secteur technique des boîtes de vitesses, par exemple automatiques, pour véhicules automobiles de tout type, tels que hybrides ou électriques.

L'invention s'applique également aux réducteurs présents dans les véhicules électriques qui ne possède pas de vitesses en tant que telles.

Plus particulièrement, l'invention concerne un système de blocage en stationnement pour une telle boîte de vitesses ou réducteur.

### ART ANTÉRIEUR

Dans l'état de la technique actuelle, il est connu du document EP3620690 un système de blocage en stationnement pour une transmission d'un réducteur ou d'une boîte de vitesses d'un véhicule automobile, le système comprenant :
- un loquet monté pivotant pour passer d'une position de blocage engagé dans un creux d'une roue de blocage liée en rotation à une sortie de la transmission, à une position de déblocage désengagé du creux ;
- un chariot monté à l'extrémité d'une tige de guidage et coulissant pour adopter alternativement une position de verrouillage, dans laquelle le chariot force le pivotement du loquet dans la position de blocage, ou une position de déverrouillage dans laquelle le loquet est rappelé par un premier ressort dans la position de déblocage ;

D'une manière connue, le chariot comprend un premier rouleau et un deuxième rouleau, chacun monté libre en rotation autour d'une goupille. Le premier rouleau est positionné pour pouvoir rouler contre le loquet lors du passage chariot en position de verrouillage, et le deuxième rouleau est positionné pour rouler, en contre-appui, sur une paroi fixe du système, opposée au loquet.

En principe, ces systèmes sont assujettis à des moyens empêchant de les actionner lorsque le véhicule roule. Par exemple, ces moyens peuvent être informatiques et pilotés électroniquement. Cela étant, de tels moyens pilotés électroniquement ne permettent pas de détecter que le véhicule roule, lorsqu'il roule à une vitesse inférieure à 3 km/h.

De ce qui précède, ces systèmes de blocage peuvent être actionnés, même si le véhicule roule, et notamment à une vitesse inférieure à 3 km/h. Lors de l'actionnement du système, le chariot pousse donc le loquet dans une position de verrouillage, dans laquelle le doigt du loquet doit être engagé dans un creux de la roue liée à la transmission.

Cependant, étant donné que le véhicule roule, la roue qui présente des parties en creux, et qui est liée à la transmission, est toujours en rotation. Il en résulte que le loquet, poussé par le chariot, tape et rebondit contre la roue, jusqu'au moment où le doigt du loquet arrive, après de multiples tentatives, à pénétrer dans le creux de la roue.

Ces impacts successifs du doigt du loquet contre la roue sont plus généralement connus sous le nom de phénomène de « ratcheting » (terme Anglo-Saxon), sont transmis aux différents éléments du système de blocage, et sont la cause de détériorations prématurées de la roue, et/ou du loquet, et/ou du système de blocage en tant que tel.

Il est connu de ce même document de positionner un ressort de compression autour de la tige, entre la paroi arrière du boîtier et le chariot, afin de pousser ledit chariot en position de verrouillage directement avec le ressort. De cette manière, lorsque le chariot est repoussé violemment en arrière lors du phénomène de « ratcheting », le chariot est amorti par le ressort, ce qui diminue le risque de détérioration.

Cependant, cette conception peut encore être améliorer, notamment en termes de résistance auxdits phénomènes de « ratcheting ».

Le document DE102005024468A1 décrit un système de blocage pour une transmission d'un réducteur ou d'une boîte de vitesses d'un véhicule automobile, mais ne donne pas entière satisfaction.

### EXPOSÉ DE L'INVENTION

Le but de la présente invention est donc de fournir un système de blocage permettant de remédier aux inconvénients de l'art antérieur, en présentant une conception lui permettant de résister davantage aux phénomènes de « ratcheting ».

À cet effet, il a été mis au point un système de blocage en stationnement pour une transmission d'un réducteur ou d'une boîte de vitesses d'un véhicule automobile conforme à la revendication 1.

Selon l'invention, le système comprend :
- un premier levier relié à la tige, et pivotant pour pousser ou tirer la tige et entrainer le coulissement du chariot ;
- un deuxième levier destiné à être pivoté par un actionneur ;
- un deuxième ressort positionné entre le premier levier et le deuxième levier, la force de rappel du deuxième ressort étant inférieure à la force nécessaire pour faire pivoter le deuxième levier, de sorte que le pivotement dans un premier sens du premier levier entraine le pivotement du deuxième levier et l'engagement du loquet s'il se trouve en face d'un creux de la roue de blocage, sinon la compression du deuxième ressort.

La construction de la présente invention permet donc d'« armer » la tige, en attendant que le loquet puisse s'engager dans un creux de la roue.

Lors du phénomène de « ratcheting », les impacts du loquet sur la roue de la transmission repoussent violemment le loquet en position de déblocage, dans laquelle il heurte et repousse violemment le chariot en position de déverrouillage. Le chariot, quant à lui, est repoussé en position de verrouillage par le deuxième levier, et subit donc des allers-retours rapides entre les positions de verrouillage et de déverrouillage.

Dans cette situation, c'est le deuxième ressort qui absorbe les retours du chariot, le deuxième levier ne pivote vers la position d'engagement du loquet que lorsque le loquet se retrouve en face d'un creux de la roue. En d'autres termes, le deuxième ressort agit comme un tampon, et accumule l'énergie de pivotement du premier levier, en attendant de pouvoir la restituer au deuxième levier lorsque le loquet pourra s'engager avec la roue de blocage. La conception avec les deux leviers pivotants est fiable et solide, les risques de détériorations sont diminués.

De préférence, le deuxième levier comprend une partie destinée à venir en appui contre le premier levier lorsque le premier levier est pivoté dans un deuxième sens, de sorte à forcer le pivotement du deuxième levier dans le deuxième sens correspondant au désengagement du loquet.

Ainsi, le retour du chariot en position de déverrouillage est forcé par le pivotement dans un deuxième sens du deuxième levier, notamment entrainé par l'actionneur.

Le premier ressort et/ou le deuxième ressort sont de tout type approprié, par exemple des ressorts de compression. Selon une forme de réalisation de conception simple et fiable, le premier ressort et/ou le deuxième ressort sont des ressorts de torsion.

Afin d'avoir un montage plus compact et fiable, tout en diminuant le nombre de pièces, le premier levier et le deuxième levier sont montés pivotants autour d'un même axe.

Selon l'invention, et pour augmenter davantage la résistance aux phénomènes de « ratcheting », le chariot comprend un premier rouleau et un deuxième rouleau, chacun monté libre en rotation autour d'une goupille, le premier rouleau étant positionné pour rouler contre le loquet lors du passage du chariot en position de verrouillage, et le deuxième rouleau étant positionné pour rouler en contre-appui sur une paroi fixe du système, opposée au loquet.

En outre, le chariot étant en forme de cage avec des parois supérieure et inférieure ouvertes pour le débordement radial des rouleaux.

### BRÈVE DESCRIPTION DES DESSINS

D'autres caractéristiques et avantages de l'invention ressortiront clairement de la description qui en est réalisée ci-après, à titre indicatif et nullement limitatif, en référence aux figures annexées, dans lesquelles :
- la figure 1 est une vue en perspective du système de blocage en stationnement, selon la présente invention
- la figure 2 est une vue schématique illustrant le loquet en position de déblocage ;
- la figure 3 est une vue similaire à celle de la figure 2, le loquet n'étant pas en face d'un creux, susceptible de créer un phénomène de « ratcheting » ;
- la figure 4 est une vue similaire à celle de la figure 3, le loquet étant en position de blocage ;
- la figure 5 est une vue en perspective du système, le deuxième levier n'étant pas actionné, le chariot étant en position de déverrouillage ;
- la figure 6 est une vue en perspective du système, similaire à celle de la figure 5, le deuxième levier étant actionné pour passer le chariot étant en position de déverrouillage, mais le deuxième ressort étant comprimé pour attendre que le loquet puisse s'engager avec un creux de la roue de blocage.

### EXPOSÉ DÉTAILLÉ DE L'INVENTION

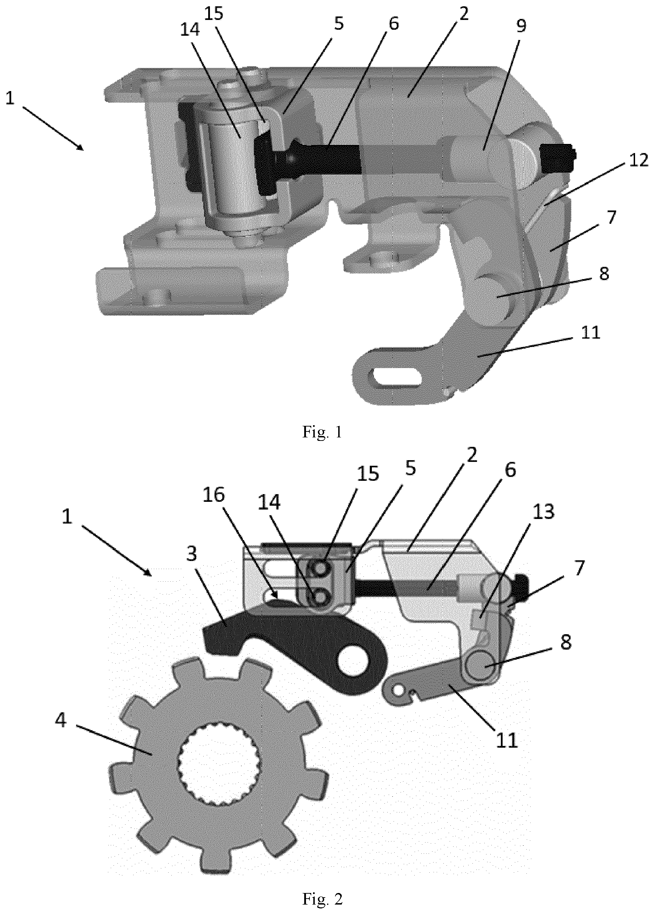

En référence aux figures 1 à 6, l'invention concerne un système (1) de blocage en stationnement pour une transmission d'un réducteur ou d'une boîte de vitesses, par exemple automatique, de véhicules automobiles, et de préférence un véhicule électrique ou hybride.

Le système comprend un boîtier (2) réalisé par au moins une tôle pliée et découpée, destiné à être fixé à une partie fixe du réducteur ou de la boîte de vitesse du véhicule.

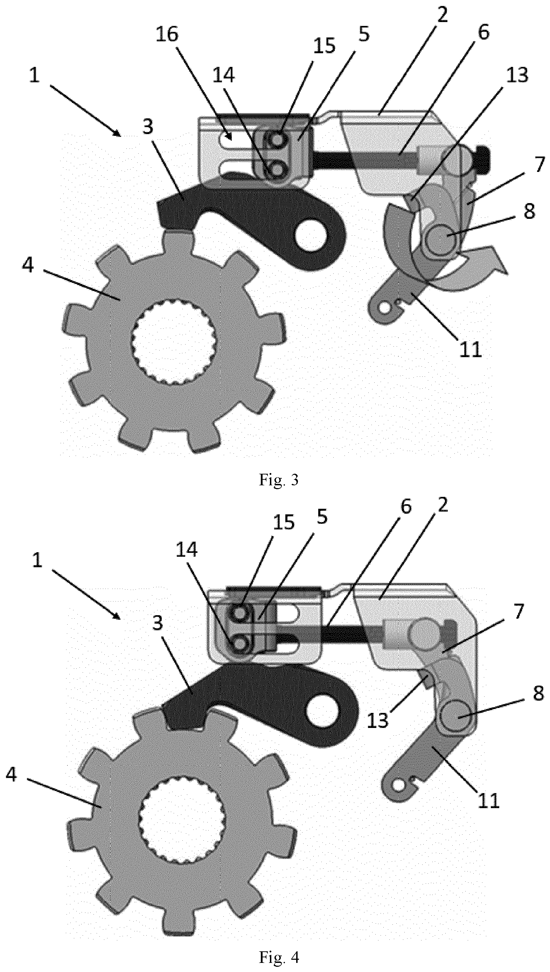

Un loquet (3) est disposé à l'intérieur du boîtier (2), et monté pivotant autour d'un axe pour passer d'une position de blocage engagé dans un creux d'une roue de blocage (4) liée en rotation à une sortie de la transmission, voir figure 4, à une position de déblocage désengagé du creux, voir figure 2.

D'une manière connue, le loquet (3) est maintenu, et rappelé dans une position de déblocage par l'intermédiaire d'un premier ressort, non représenté, par exemple sous la forme d'un ressort de torsion, agencé autour de l'axe du loquet (3), et coopérant avec des parties fixes du boîtier (2).

Le boîtier (2) comprend intérieurement un chariot (5) monté coulissant pour adopter alternativement une position de verrouillage, dans laquelle le chariot (5) force le pivotement du loquet (3) dans la position de blocage, voir figure 2, ou une position de déverrouillage dans laquelle le loquet (3) est rappelé par le premier ressort dans la position de déblocage, voir figure 4.

Plus précisément, le chariot (5) est monté à l'extrémité d'une tige (6) de guidage, elle-même reliée à un premier levier (7) pivotant autour d'un axe (8) pour pousser ou tirer la tige (6) et entrainer le coulissement du chariot (5).

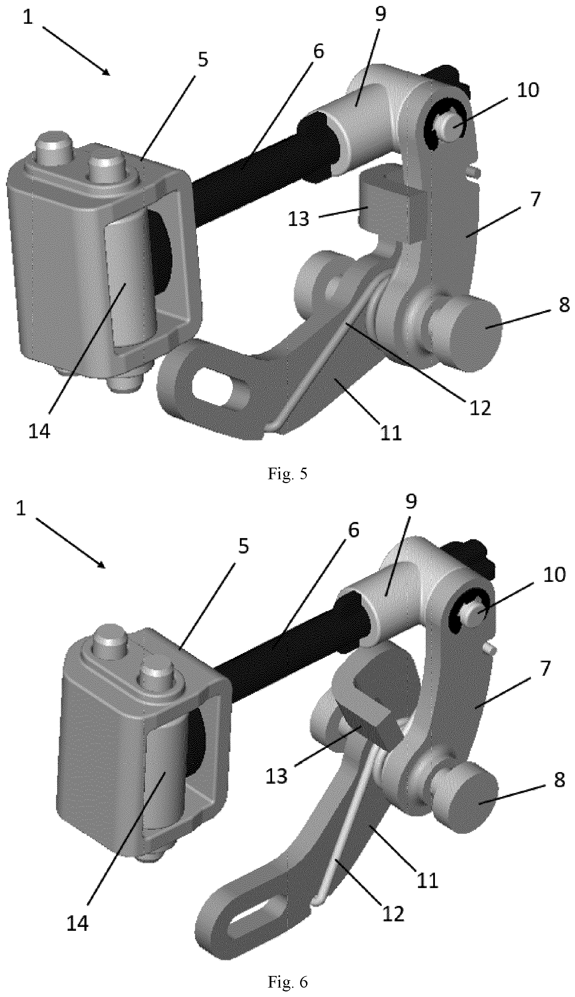

Par exemple, la tige (6) est insérée et bloquée dans un manchon (9), voir figures 5 et 6, duquel s'étend un téton (10), perpendiculairement à la tige (6), autour duquel une première extrémité du premier levier (7) est montée pivotante. En d'autres termes, le premier levier (7) est en liaison pivot au niveau de ses deux extrémités.

Le système (1) comprend un deuxième levier (11), de préférence monté pivotant autour du même axe (8) que le premier levier (7), et destiné à être pivoté par un actionneur, non représenté.

Selon une conception avantageuse, le système (1) comprend un deuxième ressort (12), notamment un deuxième ressort (12) de torsion, positionné autour de l'axe (8) de pivotement entre le premier levier (7) et le deuxième levier (11), dont la force de rappel est inférieure à celle force nécessaire pour faire pivoter le deuxième levier (11). Bien entendu, le deuxième ressort (12) peut se présenter sous la forme d'un ressort de compression sans sortir du cadre de l'invention.

De cette manière, le pivotement dans un premier sens du premier levier (7) entraine le pivotement du deuxième levier (11) et l'engagement du loquet (3) s'il se trouve en face d'un creux de la roue de blocage (4). Et, si le loquet (3) ne se trouve pas en face d'un creux, ou si la roue de blocage (4) tourne de sorte qu'il se produit le phénomène de « racheting », le deuxième ressort (12) est comprimé pour « armer » le premier levier (7), et pousser la tige (6) lorsque l'engagement du loquet (3) sera possible.

Le deuxième levier (11) comprend une partie (13), sous la forme d'une patte, destinée à venir en appui contre le premier levier (7) lorsque le premier levier (7) est pivoté dans un deuxième sens, notamment celui correspondant au passage du chariot (5) en position de déverrouillage, de sorte à forcer le pivotement du deuxième levier (11) dans le deuxième sens correspondant au désengagement du loquet (3).

Pour guider et faciliter les déplacements du chariot (5), le chariot (5) comprend un premier rouleau (14) et un deuxième rouleau (15), chacun monté libre en rotation autour d'une goupille, avec le premier rouleau (14) positionné pour rouler contre le loquet (3) lors du passage du chariot (5) en position de verrouillage, et avec le deuxième rouleau (15) positionné pour rouler en contre-appui sur une paroi fixe du système, opposée au loquet (3). L'axe de rotation des rouleaux (14, 15) peut être parallèle à l'axe (8) de pivotement des leviers (7, 11), voir figures 2 à 4, ou bien perpendiculaire, voir figures 1, 5 et 6.

Plus précisément, le chariot (5) se présente sous la forme d'une cage à l'intérieur de laquelle sont reçus, de manière flottante, le premier rouleau (14) et le deuxième rouleau (15), ainsi que la tige (6) de guidage. Le chariot (5) présente, notamment, des parois supérieures et inférieures ouvertes pour le débordement radial des rouleaux.

Lors du phénomène de « ratcheting » le chariot (5), frappé par le loquet (3), se déplace selon des mouvements alternatifs violents entre sa position de verrouillage et sa position neutre. Afin de maîtriser ces différentes positions, et de résister davantage aux impacts inhérents, au moins l'une des goupilles associées au rouleau (14, 15), et de préférence les deux, débordent de part et d'autre des rouleaux (14, 15) pour venir buter contre des parties fixes du système formant les butées d'arrêt des positions de verrouillage et neutre du chariot (5).

Selon une forme de réalisation particulière, les parois latérales du boîtier (2) sont chacune ajourée d'au moins une fente (16), et de préférence chacune ajourée d'au moins deux fentes (16) de guidage des extrémités des goupilles, lesdites extrémités des fentes (16) formant les butées d'arrêts, en tant que telles.

De préférence, et afin d'assurer le caractère flottant des premier et deuxième rouleaux (14, 15), le chariot (5) comprend des parois latérales dans lesquelles sont aménagées, de chaque côté, deux orifices de réception des goupilles, dont les diamètres sont plus importants que ceux des goupilles.

Afin d'assurer un caractère flottant à la tige (6) par rapport au chariot (5), le chariot (5) comprend une paroi arrière présentant une ouverture de réception et d'engagement de la tige (6), dont les dimensions sont plus importantes que celles du diamètre de la tige (6).

Selon une forme de réalisation particulière, la tige (6) de guidage du chariot (5) présente une extrémité en forme de « T » disposée à l'intérieur du chariot (5), notamment en appui contre les rouleaux, et permettant ainsi un accouplement entre la tige (6) et le chariot (5).

De préférence, et comme évoqué plus haut, la tige (6) est en contact avec le premier rouleau (14) et le deuxième rouleau (15). Par ailleurs, le premier rouleau (14) et le deuxième rouleau (15) sont également en contact avec une paroi avant du chariot (5), opposée au ressort (10) et à l'extrémité (15) en forme de « T » de la tige (6), au moins lorsque le chariot (5) est tiré en position de déverrouillage par la tige (6).

Etant donné que les goupilles associées aux rouleaux (14, 15) sont utilisées pour venir buter en position neutre et en position de verrouillage du chariot (5), cela permet de maîtriser les différentes positions du chariot (5), d'une manière fiable mécaniquement, et d'éviter les détériorations des pièces composant le système (1) de blocage.

D'une manière totalement indépendante, le fait que les rouleaux et la tige (6) sont reçus de manière flottante à l'intérieur du chariot (5), les efforts, lors du phénomène de « ratcheting » transmis par le loquet (3), sont transmis directement à la tige (6), en passant par les goupilles et les rouleaux (14, 15), mais sans passer par le chariot (5).

Également, d'une manière aussi indépendante, la tige (6) est en contact et en appui en permanence contre le premier rouleau (14) et le deuxième rouleau (15), et le premier rouleau (14) et le deuxième rouleau (15) sont en contact, et de préférence en permanence, avec une paroi avant du chariot (5), opposée au ressort (10), de sorte que les efforts sont transmis directement à la tige (6), qui absorbe et dissipe ces impacts. Cela permet, notamment, d'avoir un système qui puisse résister davantage aux phénomènes de « ratcheting ».

Il ressort de ce qui précède, que la conception du système de blocage selon l'invention présente une résistance accrue, capable de résister aux phénomènes de « racheting », en diminuant le risque de détérioration ou rupture.

## Revendications

1. Système (1) de blocage en stationnement pour une transmission d'un réducteur ou d'une boîte de vitesses d'un véhicule automobile, le système comprenant :
- un loquet (3) monté pivotant pour passer d'une position de blocage engagé dans un creux d'une roue de blocage (4) liée en rotation à une sortie de la transmission, à une position de déblocage désengagé du creux ;
- un chariot (5) monté à l'extrémité d'une tige (6) de guidage et coulissant pour adopter alternativement une position de verrouillage, dans laquelle le chariot (5) force le pivotement du loquet (3) dans la position de blocage, ou une position de déverrouillage dans laquelle le loquet (3) est rappelé par un premier ressort dans la position de déblocage ; le chariot comprenant un premier rouleau et un deuxième rouleau, chacun monté libre en rotation autour d'une goupille, le premier rouleau étant positionné pour rouler sur le loquet lors du passage du chariot en position de verrouillage, et le deuxième rouleau étant positionné pour rouler, en contre-appui, sur une paroi fixe du système opposée au loquet ; le chariot (5) étant en forme de cage avec des parois supérieure et inférieure ouvertes pour le débordement radial des rouleaux ;
***caractérisé* en ce qu'**il comprend
- un premier levier (7) relié à la tige (6), et pivotant pour pousser ou tirer la tige (6) et entrainer le coulissement du chariot (5) ; en outre :
- un deuxième levier (11) destiné à être pivoté par un actionneur ; et
- un deuxième ressort (12) positionné entre le premier levier (7) et le deuxième levier (11), la force de rappel du deuxième ressort (12) étant inférieure à la force nécessaire pour faire pivoter le deuxième levier (11), de sorte que le pivotement dans un premier sens du premier levier (7) entraine le pivotement du deuxième levier (11) et l'engagement du loquet (3) s'il se trouve en face d'un creux de la roue de blocage (4), sinon la compression du deuxième ressort (12).

2. Système selon la revendication 1, ***caractérisé* en ce que** le deuxième levier (11) comprend une partie (13) destinée à venir en appui contre le premier levier (7) lorsque le premier levier (7) est pivoté dans un deuxième sens, de sorte à forcer le pivotement du deuxième levier (11) dans le deuxième sens correspondant au désengagement du loquet (3).

3. Système selon l'une des revendications précédentes, ***caractérisé* en ce que** le premier ressort et/ou le deuxième ressort (12) sont des ressorts de torsion.

4. Système selon l'une des revendications précédentes, ***caractérisé* en ce que** le premier levier (7) et le deuxième levier (11) sont montés pivotants autour d'un même axe (8).

## Patentansprüche

1. Blockiersystem (1) für eine Getriebeübersetzung oder ein Getriebe eines Kraftfahrzeugs, wobei das System umfasst:
- einen Riegel (3), der schwenkbar montiert ist, um von einer Blockierposition, in der er in eine Vertiefung eines Blockierrads (4) eingreift, das drehbar mit einem Ausgang der Getriebeübersetzung verbunden ist, in eine Entriegelungsposition zu wechseln, in der er aus der Vertiefung herausgelöst ist;
- einen Schlitten (5), der am Ende einer Führungsstange (6) montiert ist und gleitend eine Verriegelungsposition einnimmt, in der der Schlitten (5) das Schwenken des Riegels (3) in die Blockierposition erzwingt, oder eine Entriegelungsposition, in der der Riegel (3) durch eine erste Feder in die Entriegelungsposition zurückgeführt wird; der Schlitten umfasst eine erste Rolle und eine zweite Rolle, die jeweils frei drehbar um einen Bolzen montiert sind, wobei die erste Rolle so positioniert ist, dass sie beim Übergang des Schlittens in die Verriegelungsposition über den Riegel rollt, und die zweite Rolle so positioniert ist, dass sie gegen eine feste Wand des Systems, die dem Riegel gegenüberliegt, rollt; der Schlitten (5) ist käfigförmig mit offenen oberen und unteren Wänden für das radiale Überstehen der Rollen;
**gekennzeichnet dadurch, dass** es umfasst:
- einen ersten Hebel (7), der mit der Stange (6) verbunden ist und schwenkbar die Stange (6) schiebt oder zieht und das Gleiten des Schlittens (5) bewirkt; außerdem:
- einen zweiten Hebel (11), der durch einen Aktuator geschwenkt werden soll; und
- eine zweite Feder (12), die zwischen dem ersten Hebel (7) und dem zweiten Hebel (11) positioniert ist, wobei die Rückstellkraft der zweiten Feder (12) geringer ist als die Kraft, die erforderlich ist, um den zweiten Hebel (11) zu schwenken, sodass das Schwenken des ersten Hebels (7) in eine Richtung das Schwenken des zweiten Hebels (11) und das Eingreifen des Riegels (3) bewirkt, wenn er sich gegenüber einer Vertiefung des Blockierrads (4) befindet, andernfalls die Kompression der zweiten Feder (12).

2. System nach Anspruch 1, **dadurch gekennzeichnet, dass** der zweite Hebel (11) einen Teil (13) umfasst, der dazu bestimmt ist, gegen den ersten Hebel (7) zu drücken, wenn der erste Hebel (7) in eine zweite Richtung geschwenkt wird, um das Schwenken des zweiten Hebels (11) in die zweite Richtung zu erzwingen, die dem Ausrücken des Riegels (3) entspricht.

3. System nach einem der vorhergehenden Ansprüche, **dadurch gekennzeichnet, dass** die erste Feder und/oder die zweite Feder (12) Torsionsfedern sind.

4. System nach einem der vorhergehenden Ansprüche, **dadurch gekennzeichnet, dass** der erste Hebel (7) und der zweite Hebel (11) um eine gemeinsame Achse (8) schwenkbar montiert sind.

## Claims

1. Parking lock system (1) for a transmission of a reducer or a gearbox of a motor vehicle, the system comprising:
- a latch (3) mounted pivotally to move from a locking position engaged in a recess of a locking wheel (4) rotationally linked to an output of the transmission, to an unlocking position disengaged from the recess;
- a carriage (5) mounted at the end of a guide rod (6) and sliding to alternatively adopt a locking position, in which the carriage (5) forces the pivoting of the latch (3) into the locking position, or an unlocking position in which the latch (3) is returned by a first spring to the unlocking position; the carriage comprising a first roller and a second roller, each mounted freely in rotation around a pin, the first roller being positioned to roll on the latch during the passage of the carriage into the locking position, and the second roller being positioned to roll, in counter-support, on a fixed wall of the system opposite the latch; the carriage (5) being in the form of a cage with open upper and lower walls for the radial overflow of the rollers;
**characterized in that** it comprises
- a first lever (7) connected to the rod (6), and pivoting to push or pull the rod (6) and cause the sliding of the carriage (5); furthermore:
- a second lever (11) intended to be pivoted by an actuator; and
- a second spring (12) positioned between the first lever (7) and the second lever (11), the return force of the second spring (12) being less than the force required to pivot the second lever (11), so that the pivoting in a first direction of the first lever (7) causes the pivoting of the second lever (11) and the engagement of the latch (3) if it is facing a recess of the locking wheel (4), otherwise the compression of the second spring (12).

2. System according to claim 1, **characterized in that** the second lever (11) comprises a part (13) intended to come into support against the first lever (7) when the first lever (7) is pivoted in a second direction, so as to force the pivoting of the second lever (11) in the second direction corresponding to the disengagement of the latch (3).

3. System according to one of the preceding claims, **characterized in that** the first spring and/or the second spring (12) are torsion springs.

4. System according to one of the preceding claims, **characterized in that** the first lever (7) and the second lever (11) are pivotally mounted around the same axis (8).
